# EUROPÄISCHE PATENTSCHRIFT

(11) **EP 3 475 196 B1**
(45) Veröffentlichungstag und Bekanntmachung des Hinweises auf die Patenterteilung: **22.03.2023**
(21) Anmeldenummer: 17727169.9
(22) Anmeldetag: 24.05.2017
(51) Int. Cl.: B65G 43/00, B65G 43/10

(54) **TRANSPORTVORRICHTUNG UND VERFAHREN ZUR STEUERUNG UND ÜBERWACHUNG DIE DEHNUNG EINER TRANSPORTVORRICHTUNG**
TRANSPORT DEVICE AND METHOD FOR CONTROLLING AND MONITORING THE ELONGATION OF A TRANSPORT DEVICE
DISPOSITIF DE TRANSPORT ET PROCÉDÉ PERMETTANT DE COMMANDER ET DE CONTRÔLER L'EXPANSION D'UN DISPOSITIF DE TRANSPORT

(30) Priorität: 22.06.2016 DE 102016111421
(43) Veröffentlichungstag der Anmeldung: 01.05.2019
(73) Patentinhaber: KHS GmbH, 44143 Dortmund (DE)
(72) Erfinder: WAGNER, Stefan, 47533 Kleve (DE); LINDNER, Andreas, 58452 Witten (DE); THIESING, Dominik, 46499 Hamminkeln (DE); LELIE, Thomas, 47533 Kleve (DE); DÜPPER, Josef, 47551 Bedburg-Hau (DE); WILZECK, Reinhard, 47533 Kleve (DE)
(86) Internationale Anmeldenummer: PCT/EP2017/062674
(87) Internationale Veröffentlichungsnummer: WO 2017/220281

(56) Entgegenhaltungen:
- EP-A1- 1 850 087
- EP-A1- 3 475 196
- DE-A1-102010 043 057
- DE-B3-102011 075 994
- US-A1- 2008 082 206

## Beschreibung

Die Erfindung betrifft eine Vorrichtung zum Transport von Behältern oder Gebinden, umfassend ein endlos umlaufendes Transportelement, eine Antriebseinheit zum Antrieb des umlaufenden Transportelements, eine Steuereinheit zur Steuerung der Antriebseinheit und mindestens einen stationären Sensor zur Erfassung mindestens einer Positionsmarke des Transportelements. Weiterhin betrifft die Erfindung ein Verfahren zur Steuerung und Überwachung einer Transportvorrichtung.

Vorrichtungen zum Transport von Behältern oder Gebinden sowie Verfahren zur Steuerung und Überwachung einer solchen Transportvorrichtung sind in vielfältiger Ausgestaltung aus dem Stand der Technik bekannt. Entsprechende Vorrichtungen und Verfahren finden dabei Anwendung bei der Herstellung und Verpackung von Waren, insbesondere Lebensmitteln. Jedoch werden entsprechende Transportvorrichtungen auch in zahlreichen anderen Gebieten, insbesondere bei der Produktion, Verarbeitung oder Lagerung von Waren und Gütern eingesetzt.

Ein bekanntes Problem solcher Transportvorrichtungen ist, dass die endlos umlaufenden Transportelemente, meist Bänder oder Ketten, über die Nutzungszeit einer Längenänderung unterliegen. Diese Längenänderungen treten zum einen über das gesamte Transportelement gleichmäßig aufgrund von während der Nutzungszeit wirkenden Kräften in Abhängigkeit des Materials der Transportvorrichtung auf. Zum anderen kommt es aber auch ortsabhängig auf dem Transportelement aufgrund unterschiedlicher Eigenschaften, beispielsweise einer unterschiedlichen Materialstärke, Härtung eines Metalls oder Vernetzung eines Polymers zu Längenänderungen. Auch tragen dabei weitere äußere Einflüsse wie eine Verschmutzung, Temperaturänderungen, die Feuchtigkeit oder die jeweilige Schmierung zu Änderungen der Länge bei.

Diese Längenänderungen führen zum einen dazu, dass mit zunehmender Betriebsdauer die Wahrscheinlichkeit einer Fehlfunktion der Transportvorrichtung, insbesondere aufgrund einer Dehnung des Transportelements steigt, weswegen die Transportvorrichtung regelmäßig außer Betrieb genommen werden muss, um die bereits aufgetretene Dehnung zu messen und gegebenenfalls das Transportelement auszutauschen, um einen Ausfall und mögliche dabei auftretende Folgeschäden zu verhindern.

Zum anderen führt eine Längenänderung des Transportelements dazu, dass bei einem konstanten Betrieb der Antriebseinheit sich die Geschwindigkeit des Transportelements in Abhängigkeit von der Längenänderung ändert. Aufgrund dessen kann eine Asynchronität zwischen der Transportvorrichtung und weiterer, damit zusammenwirkender Vorrichtungen bzw. weiterer paralleler oder nachfolgender Transportvorrichtungen auftreten. Insbesondere in einem Übergabebereich von einer Transportvorrichtung auf eine weitere Transportvorrichtung ist es von entscheidender Bedeutung, dass die aneinander angrenzenden Transportvorrichtungen synchrone Geschwindigkeiten aufweisen, um unerwünschte Kräfte auf die transportierten Behälter oder Gebinde aufgrund von im Übergabebereich auftretenden Relativgeschwindigkeiten zu vermeiden. Auch bei mehreren, parallel zueinander angeordneten Transportvorrichtungen führt ein Geschwindigkeitsunterschied zu einer unerwünschten Verdrehung der transportierten Behälter oder Gebinde in Bezug zur Transportrichtung.

Bei üblichen Vorrichtungen des Standes der Technik sind, um dieses Problem zu lösen, entlang des endlos umlaufenden Transportelements wenigstens zwei Sensoren angeordnet, die wenigstens eine Kennzeichnung am Transportelement überwachen.

So ist beispielsweise aus der Druckschrift DE 60 2004 006 459 T2 ein Verfahren und eine Vorrichtung zum Überwachen des Verschleißes von Kettengliedern bekannt, bei dem eine umlaufende Kette zwei Kennzeichnungen aufweist, die von zwei Sensoren erfasst werden können. Dabei ist der erste Sensor fest an der Vorrichtung angeordnet, während der zweite Sensor entlang der Kette verschiebbar ist. Bei dem Verfahren wird der zweite Sensor derart entlang der Kette positioniert, dass beide Sensoren jeweils eine Kennzeichnung zeitgleich erfassen. Bei einer Dehnung der Kette kommt es zu einer Zeitverzögerung des Auslösens der beiden Sensoren, wo-Synchronität der Signale bewegt und die dafür notwendige Strecke des zweiten Sensors erfasst wird.

Auch aus der Druckschrift US 5,563,392 A ist ein Verfahren sowie eine entsprechende Vorrichtung zur Überwachung des Verschleißes einer kontinuierlichen Kette bekannt. In der Vorrichtung sind zwei Sensoren in konstantem Abstand zueinander entlang der Verlaufsrichtung der Kette angeordnet, um die Lücken zwischen den einzelnen Kettengliedern zu erfassen. Dabei sind beide Sensoren derart angeordnet, dass diese bei einer ungedehnten Kette zugleich jeweils den Durchgang eines Kettengliedes messen. Bei einer Dehnung der Kette kommt es zu einer Asynchronität der Erfassung, wobei aus der Zeitdifferenz der Erfassung jeweils eines Kettengliedes die Dehnung berechenbar ist.

Darüber hinaus sind aus dem Stand der Technik auch Verfahren und Vorrichtungen bekannt, die lediglich einen Sensor und zahlreiche Kennzeichnungen an dem umlaufenden Transportelement verwenden, um eine Dehnung des Transportelements zu bestimmen. So sind beispielsweise bei der in der Druckschrift DE 11 2004 001 238 T5 offenbarten Vorrichtung zum Messen der Dehnung eines Förderbandes eine Mehrzahl von Magneten in gleichbleibendem Abstand zueinander in das Förderband eingebettet, wobei an dem Förderband ein Magnetismus-Sensor angeordnet ist, der aus der zeitlichen Änderung des detektierten Magnetfeldes die Dehnung des Förderbandes bestimmt.

Weiterhin ist aus der DE 10 2010 043057 A1 eine Antriebsvorrichtung bekannt, bei welcher mittels eines am Antriebselement angeordneten Gebers Weginkremente generierbar und auswertbar sind, und hierdurch eine betriebsbedingte Längung des Förderelementes rechnerisch kompensiert werden kann. DE 10 2010 043057 A1 offenbart den Oberbegriff des Anspruchs 9. US 2008 082206 A1 offenbart den Oberbegriff des Anspruchs 1.

Die EP 1 850 087 A1 offenbart weiterhin ein System mit einer umlaufenden Antriebskette, die in Eingriff mit einem rotierenden Zahnrad steht, die auch eine Anordnung zum Überwachen der Kettendehnung umfasst, mit zwei ortsfesten Sensoren und einer Auswertungseinheit. Dabei sind die Sensoren derart ausgebildet, dass mittels des ersten Sensors die Durchgangsbewegung der Kettenelemente an dem ersten Sensor und mittels des zweiten Sensors die Drehbewegung des Zahnrades erfasst wird. Die Auswertungseinheit vergleicht diese beiden Werte.

Derartige Ausgestaltungen des Standes der Technik haben jedoch den Nachteil, dass entweder mehrere Sensoren entlang dem Transportelement angeordnet werden müssen, was zu einem komplexen Aufbau sowie zu hohen Herstellungskosten führt, oder das Transportelement eine Vielzahl von Kennzeichnungen aufweisen muss, was in einem hohen Preis des Transportelements resultiert, das als Verschließteil regelmäßig getauscht werden muss. Bei der Verwendung mehrerer Sensoren wird das Messergebnis weiterhin regelmäßig nachteilig dadurch beeinflusst, dass sich die Position der Sensoren in Bezug zueinander bzw. zum Transportmittel verändert, insbesondere durch eine thermische Ausdehnung der Transportvorrichtung bei steigenden Temperaturen während des Betriebs oder durch mechanische Einflüsse und dadurch die Genauigkeit der Messungen abnimmt.

Die Aufgabe besteht nun darin, eine Vorrichtung zur Herstellung von Behältern oder Gebinden sowie ein entsprechendes Verfahren bereitzustellen, die in besonders einfacher Weise und mit besonders wenig Bauteilen eine zuverlässige Überwachung der Dehnung eines Transportelements sowie eine präzise Steuerung der Geschwindigkeit des Transportelements ermöglicht und dabei besonders kostengünstig herzustellen und zu betrieben ist.

Die Aufgabe wird erfindungsgemäß durch eine Vorrichtung gemäß Anspruch 1 und ein Verfahren gemäß Anspruch 9 gelöst. Vorteilhafte Weiterbildungen der Erfindung sind in den abhängigen Ansprüchen angegeben.

Die erfindungsgemäße Vorrichtung zum Transport von Behältern oder Gebinden weist ein endlos umlaufendes Transportelement, eine Antriebseinheit zum Antrieb des umlaufenden Transportelements, eine Steuereinheit zur Steuerung der Antriebseinheit sowie mindestens einen stationären Sensor zur Erfassung mindestens einer Positionsmarke des Transportelements auf. Die Antriebseinheit umfasst erfindungsgemäß ein Mittel zur Positions- bzw. Stellausgabe, insbesondere einen Drehwinkelsensor. Dabei ist die Steuereinheit derart mit dem Mittel zur Positions- bzw. tung bei steigenden Temperaturen während des Betriebs oder durch mechanische Einflüsse und dadurch die Genauigkeit der Messungen abnimmt.

Der Behältern oder Gebinden sowie ein entsprechendes Verfahren bereitzustellen, die in besonders einfacher Weise und mit besonders wenig Bauteilen eine zuverlässige Überwachung der Dehnung eines Transportelements sowie eine präzise Steuerung der Geschwindigkeit des Transportelements ermöglicht und dabei besonders kostengünstig herzustellen und zu betrieben ist.

Die erfindungsgemäße Vorrichtung zum Transport von Behältern oder Gebinden weist ein endlos umlaufendes Transportelement, eine Antriebseinheit zum Antrieb des umlaufenden Transportelements, eine Steuereinheit zur Steuerung der Antriebseinheit sowie mindestens einen stationären Sensor zur Erfassung mindestens einer Positionsmarke des Transportelements auf. Die Antriebseinheit umfasst erfindungsgemäß ein Mittel zur Positions- bzw. Stellausgabe, insbesondere einen Drehwinkelsensor. Dabei ist die Steuereinheit derart mit dem Mittel zur Positions- bzw. Stellausgabe sowie mit dem Sensor verbunden, dass mittels der Daten des Mittels zur Positions- bzw. Stellausgabe sowie des Sensors die Antriebseinheit gesteuert werden kann und/oder eine Dehnung des Transportelements berechenbar ist.

Die Erfinder der erfindungsgemäßen Vorrichtung haben erkannt, dass keine zwei angeordneten Sensoren an einem Transportelement mit einer Positionsmarke notwendig sind, um eine zuverlässige Erkennung der wirklichen Geschwindigkeit und/oder der Dehnung des Transportelements zu ermitteln, sondern dass auch mittels eines Sensors sowie eines in der Antriebseinheit angeordneten Drehwinkelgebers in noch einfacherer Weise eine Überwachung und/oder Steuerung der Vorrichtung möglich ist. Darüber hinaus führt der Wegfall eines zweiten Sensors entlang des Transportelements zu einer vorteilhaften Vereinfachung des Aufbaus sowie zu einer Einsparung von Herstellungskosten. Darüber hinaus ist die Bestimmung auch Stellausgabe sowie mit dem Sensor verbunden, dass mittels der Daten des Mittels zur Positions- bzw. Stellausgabe sowie des Sensors die Antriebseinheit gesteuert werden kann und/oder eine Dehnung des Transportelements berechenbar ist.

Die Erfinder der erfindungsgemäßen Vorrichtung haben erkannt, dass keine zwei angeordneten Sensoren an einem Transportelement mit einer Positionsmarke notwendig sind, um eine zuverlässige Erkennung der wirklichen Geschwindigkeit und/oder der Dehnung des Transportelements zu ermitteln, sondern dass auch mittels eines Sensors sowie eines in der Antriebseinheit angeordneten Drehwinkelgebers in noch einfacherer Weise eine Überwachung und/oder Steuerung der Vorrichtung möglich ist. Darüber hinaus führt der Wegfall eines zweiten Sensors entlang des Transportelements zu einer vorteilhaften Vereinfachung des Aufbaus sowie zu einer genauer und zuverlässiger, da der Drehwinkelgeber gewöhnlich im Inneren der Antriebseinheit verbaut ist und dadurch eine geringe Anfälligkeit gegenüber Störeinflüssen aufweist.

Bei dem erfindungsgemäßen Verfahren zur Steuerung und Überwachung einer Transportvorrichtung, mit einem durch eine Antriebseinheit mit einem Drehwinkelgeber angetriebenen endlos umlaufenden Transportelement sowie einem stationären Sensor zu Erfassung einer Positionsmarke des Transportelements, wird zunächst ein erster Drehwinkel mittels des Drehwinkelgebers bei einer Erfassung der Positionsmarke durch den Sensor erfasst und in einer Steuereinheit als Referenzdrehwinkel abgespeichert. Anschließend erfolgt eine Bestimmung wenigstens eines weiteren Drehwinkels bei einer erneuten Erfassung der Positionsmarke durch den Sensor und Übermittlung an die Steuereinheit. Der erfasste Drehwinkel wird nachfolgend mit dem Referenzdrehwinkel in der Steuereinheit abgeglichen und mittels des bei dem Abgleich erhaltenen Ergebnisses bzw. aus der zeitlichen Änderung der erhaltenen Ergebnisse kann eine Reglung der Geschwindigkeit der Antriebseinheit und/oder eine Bestimmung der Dehnung des Transportelements erfolgen.

Das erfindungsgemäße Verfahren ermöglicht es in besonderes einfacher Weise beim Auftreten tribologischer Effekte im Bereich des Transportelements, besonders einer Längenänderung und insbesondere einer Dehnung, diese zu bestimmen, da die Positionsmarke den Sensor in Bezug zu dem gemessenen Drehwinkel bei einem gedehnten Transportelement später erreicht. Weiterhin ist es möglich, die Geschwindigkeit des Transportelements, insbesondere durch eine entsprechende Beschleunigung der Antriebseinheit, anzupassen bzw. über die gesamte Betriebsdauer konstant zu halten. Dies ist besonders wichtig, um eine problemlose Übergabe der transportierten Behälter oder Gebinde von dem oder auf das Transportelement zu gewährleisten, beispielsweise bei einer Übergabe aus einem Transportstern oder auf ein weiteres Transportelement. Eine nicht angepasste Geschwindigkeit kann nicht nur zum Wirken unerwünschter Kräfte auf den Behälter oder das Gebinde führen, sondern auch eine Verdrehung des Behälters oder Gebindes verursachen, so dass nachfolgende Arbeitsschritte erschwert werden.

Die erfindungsgemäße Vorrichtung ist zum Transport von Behältern und/oder Gebinden mittels eines Transportelements geeignet. Behältern sind dabei insbesondere Flaschen, Dosen oder Fässer aus Metall, Glas, Kunststoff und/oder einem Materialverbund. Als Gebinde wird zunächst jede Anordnung von wenigstens zwei Behältern, bevorzugt wenigstens vier und besonders bevorzugt wenigstens sechs Behältern verstanden, bei der die Behälter in einer vorbestimmten Position räumlich zueinander festgelegt sind. Dabei können die Behälter grundsätzlich unmittelbar, beispielsweise mittels einer Verklebung aneinander angeordnet, aber auch über ein weiteres Element miteinander verbunden sein.

Bei dem Transportelement handelt es sich zunächst um ein beliebiges Bauteil oder eine beliebige Baugruppe, die zum Transport von mehreren Behältern oder Gebinden geeignet ist, wobei die Behälter oder Gebinde bevorzugt wenigstens abschnittsweise, bevorzugt vollständig während des Transports auf dem Transportelement stehen bzw. liegen. Besonders bevorzugt ist das Transportelement ein Transportband oder eine Transportkette. Bevorzugt ist das Transportband dabei aus Kunststoff, Gummi und/oder einem Gewebe gebildet und weist besonders bevorzugt eine Faserverstärkung bzw. ein eingebettetes Verstärkungsgewebe auf. Insbesondere ist das Transportband dabei einstückig gebildet. Eine Transportkette ist bevorzugt aus mehreren Kettengliedern aus Metall und/oder Kunststoff gebildet, wobei besonders bevorzugt alle Kettenglieder identisch aufgebaut sind.

Erfindungsgemäß ist das Transportelement endlos umlaufend gebildet, d.h., das Transportelement weist in einer Raumrichtung, insbesondere der Bewegungsrichtung in der Vorrichtung zum Transport, kein Ende auf, sondern ist derart gebildet und in der Vorrichtung angeordnet, dass eine Stelle des Transportelements nach einem vollständigen Umlauf sich wieder an der gleichen Position befindet. Dazu wird das Transportelement in der Vorrichtung mindestens zweimal umgelenkt, wobei die Umlenkung grundsätzlich mittels eines beliebigen Umlenkelements, bevorzugt mittels wenigstens einer Antriebsrolle der Antriebseinheit und/oder wenigstens einer Umlenkrolle erfolgt. Besonders bevorzugt ist das Transportelement einenends an der Antriebseinheit und anderenends mittels einer Umlenkrolle umgelenkt.

Bei der erfindungsgemäßen Antriebseinheit kann es sich grundsätzlich um eine beliebige Baugruppe handeln, die zum Antrieb des Transportelements vorgehsehen ist. Dabei kann die Antriebseinheit neben einem Motor auch weitere Bauteile wie Getriebe, Achsen, Umlenk- oder Antriebsrollen, insbesondere für das Transportelement, umfassen. Die Antriebseinheit weist grundsätzlich einen Motor mit einem Drehwinkelgeber bzw. einem Mittel zur Positions- bzw. Stellausgabe auf. Insbesondere ist der Motor ein Elektromotor bzw. elektromagnetischer Antrieb. Besonders bevorzugt ist der Motor ein Servomotor mit integriertem Drehwinkelgeber. Weiterhin bevorzugt ist der Motor stufenlos regelbar.

Unter einem Drehwinkelgeber wird zunächst ein beliebiges Mittel zur Positions- bzw. Stellausgabe der Antriebseinheit, insbesondere einer Abtriebsachse der Antriebseinheit oder einer Antriebsachse des Transportelements verstanden. Grundsätzlich handelt es sich bei dem Drehwinkelgeber um einen Sensor, der einen Drehwinkel bzw. ein Maß für den Drehwinkel erfasst. Bevorzugt ist der Drehwinkelgeber ein Inkrementalgeber zur Erfassung einer Winkeländerung, insbesondere im Sinne eines digitalen Endlos-Potentiometers. Die Messung des Drehwinkelgebers kann in beliebiger Weise erfolgen, beispielsweise mittels photoelektrischer Abtastung, einem Schleifkontakt, magnetischer Abtastung oder mittels eines Zahnradgebers. Besonders bevorzugt ist der Drehwinkelgeber in einem Motor, insbesondere in dem Servomotor der Antriebseinheit integriert.

Entsprechend kann es sich bei dem bestimmten Drehwinkel sowohl um eine tatsächliche Winkelangabe, als aber auch um einen beliebigen, einen Winkel repräsentierenden Wert handeln. Weiterhin kann der Drehwinkel bzw. Drehwinkelwert auch erst mittels der Steuereinheit bestimmbar sein, beispielsweise wenn es sich bei dem Drehwinkelgeber um einen Inkrementalgeber handelt und erst in der Steuereinheit mittels der bekannten, eine volle Umdrehung repräsentierenden Anzahl an Inkrementen der jeweilige Winkelwert bestimmt wird. Entsprechendes gilt auch für den Referenzdrehwinkel.

Bei der Steuereinheit handelt es sich grundsätzlich um ein Datenverarbeitungssystem, das zur Aufnahme bzw. Einspeisung von Signalen mehrerer Sensoren, wenigstens aber des Sensors für die Positionsmarke des Transportelements sowie des Drehwinkelgebers geeignet ist. Darüber hinaus kann mittels der Steuereinheit zumindest teilweise, bevorzugt vollständig eine Verarbeitung der gemessenen Sensordaten und/oder eine Steuerung der Antriebseinheit erfolgen. Bevorzugt weist die Steuereinheit eine Benutzerschnittstelle oder eine Schnittstelle zum Anschluss eines eine Benutzerschnittstelle umfassenden Gerätes auf. Ebenfalls bevorzugt weist die Steuereinheit wenigstens eine weitere Schnittstelle zur Kopplung mit wenigstens einer weiteren Steuereinheit auf. Besonders bevorzugt ist die Steuereinheit digital programmierbar, wobei die Programmierung sowohl mittels einer Benutzerschnittstelle der Steuereinheit, als auch mittels einer weiteren, an die Steuereinheit anschließbaren Datenverarbeitungsanlage, insbesondere eines Computers oder Tabletts erfolgen kann. Weiterhin bevorzugt umfasst die Benutzerschnittstelle sowohl Eingabemittel, beispielsweise Tasten, als auch Ausgabemittel, insbesondere einen Bildschirm, wobei ganz besonders bevorzugt ein berührungsempfindlicher Bildschirm als Eingabe- und Ausgabemittel zugleich vorgesehen ist. Ganz besonders bevorzugt ist die Steuereinheit eine speicherprogrammierbare Steuerung (SPS). Ebenfalls bevorzugt erfolgt die Steuerung der Antriebseinheit und/oder die Berechnung der Dehnung des Transportelements vollständig mittels der Steuereinheit.

Die Verbindung der Steuereinheit mit dem wenigstens einen Sensor sowie dem Drehwinkelgeber kann grundsätzlich in beliebiger Weise erfolgen. Dabei ist sowohl eine drahtlose Verbindung, beispielsweise mittels Funk bzw. Radiofrequenz, Infrarot, oder in sonstiger Weise mittels optischer Signale oder Funksignale, als auch mittels eines elektrischen Leiters oder eines Lichtwellenleiters möglich. Bevorzugt erfolgt die Verbindung jeweils mittels eines elektrischen Leiters. Weiterhin können der Sensor und/oder der Drehwinkelgeber sowohl direkt mit der Steuereinheit als auch über weitere Bauteile, wie beispielsweise Encoder, Wandler oder dergleichen, mit der Steuereinheit verbunden sein.

Bei dem Sensor kann es sich um einen beliebigen Sensor handeln, der geeignet ist, die Positionsmarke des Transportelements zu erfassen. Dabei kann es sich im einfachsten Fall um einen mechanischen Sensor, beispielsweise um einen Schalter handeln, der von der sich vorbeibewegenden Positionsmarke direkt oder über weitere Bauteile betätigt wird. Weiterhin kann es sich auch um einen berührungslosen Sensor handeln, der insbesondere die Positionsmarke optisch oder elektromagnetisch erfasst. Die Erfassung kann dabei quantitativ bzw. digital erfolgen, wobei lediglich erfasst wird, dass sich die Positionsmarke im Messbereich des Sensors befand. Alternativ kann auch eine qualitative bzw. analoge Messung erfolgen, bei der die Stärke des Signals oder eine andere Charakteristik bei der Erfassung der Positionsmarke ermittelt wird.

Dabei ist der Sensor grundsätzlich stationär an der Vorrichtung festgelegt, so dass im Betrieb und/oder während des erfindungsgemäßen Verfahrens der Sensor nicht bewegt werden muss bzw. kann. Grundsätzlich kann der Sensor auch beweglich, beispielsweise verschwenkbar an der Vorrichtung festgelegt sein, beispielsweise um eine Reinigung des Transportelements zu erleichtern, jedoch muss die Gebrauchslage des Sensors stationär, d.h., gleichbleibend und unbeweglich sein. Bevorzugt ist der Sensor an der Vorrichtung jedoch ausrichtbar angeordnet, so dass der Sensor in eine ideale Position zur Erkennung der Positionsmarke gebraucht und dort stationär festgelegt werden kann.

Bei der Positionsmarke handelt es sich um ein Bauteil oder alternativ um ein Teil des Transportelements, das derart ausgelegt ist und sich gegenüber dem übrigen Transportelement derart unterscheidet, dass dieses zuverlässig mittels des Sensors erfasst werden kann. Bevorzugt befindet sich die Positionsmarke an einer Oberfläche des Transportelements, die von der entgegenlaufenden Seite des endlos umlaufenden Transportelements abgewandt ist und/oder die sich in einer Aufstelllage der Vorrichtung auf der Oberseite des Transportelements zur Aufnahme von Behältern oder Gebinden befindet. Weiterhin bevorzugt ist die Positionsmarke derart am Rand des Transportelements angeordnet, dass auf dem Transportelement transportierte Behälter oder Gebinde die Positionsmarke nicht verdecken können.

Bei der Steuerung der Antriebseinheit bzw. des Antriebselements mittels der Steuereinheit handelt es sich bevorzugt um eine dynamische Steuerung, d.h., die Daten des Sensors sowie des Drehwinkelgebers werden direkt verarbeitet und die Steuerung der Geschwindigkeit des Antriebselements erfolgt ebenfalls direkt, insbesondere bei jeder Erfassung der Positionsmarke durch den Sensor. Alternativ kann eine Anpassung der Geschwindigkeit auch nur nach einer festgelegten Anzahl von Auslösungen des Sensors erfolgte, beispielsweise nach jeder zehnten oder einhundertsten Sensorauslösung.

Das Abspeichern des Referenzdrehwinkels kann sowohl manuell auslösbar sein, beispielsweise mittels einer Taste oder einer Benutzerschnittstelle, oder aber automatisch, beispielsweise mittels eines Sensors für einen Wechsel des Transportelements erfolgen. Bevorzugt erfolgt eine Festlegung des Referenzdrehwinkels nach einem Wechsel und/oder nach einem vordefinierten Einlaufen eines neuen Transportelements.

Erfindungsgemäß wird bei einer erneuten, der Bestimmung des Referenzdrehwinkels folgenden Erfassung der Positionsmarke ein Drehwinkel bestimmt, um diesen mit dem Referenzdrehwinkel abgleichen zu können. Bevorzugt erfolgt dies im Rahmen einer kontinuierlichen Bestimmung der Drehwinkel bei jeder Erfassung der Positionsmarke durch den Sensor, wodurch in vorteilhafter Weise nicht nur der Einfluss einer Abnutzung des Transportelements, sondern auch der Einfluss von auf dem Transportelement befindlichen Behältern oder Gebinden berücksichtigt werden kann.

Alternativ kann jedoch auch eine diskontinuierliche Bestimmung des selben oder weiterer Drehwinkel in vorbestimmten, längeren Zeitabständen erfolgen, beispielsweise stündlich, täglich oder wöchentlich.

Eine bevorzugte Ausgestaltung der erfindungsgemäßen Vorrichtung weist genau einen Sensor pro Transportelement auf, wodurch eine besonders günstige Herstellung der Vorrichtung möglich ist. Insbesondere bevorzugt weist die Vorrichtung genau einen Sensor an dem Transportelement auf. Ebenfalls bevorzugt wird eine Ausgestaltung der Vorrichtung mit genau einer Positionsmarke pro Transportelement, wodurch das Transportelement, das als Verschließteil regelmäßig erneuert werden muss, besonders einfach und kostengünstig herstellbar ist.

Bei einer weiteren bevorzugten Ausgestaltung der erfindungsgemäßen Vorrichtung sind mindestens zwei identische Sensoren versetzt zueinander entlang des Transportelements angeordnet und wirken dabei derart mit der Steuereinheit zusammen, dass die Daten jedes Sensors mit Daten des Drehwinkelgebers verarbeitet werden können, um eine abschnittsaufgelöste Bestimmung der Dehnung des Transportelements und/oder eine abschnittsaufgelöste dynamischen Geschwindigkeitssteuerung der Antriebseinheit zu ermöglichen. Dadurch kann sowohl eine ungleichmäßige Dehnung des Transportelements als auch eine unterschiedliche Belastung, beispielsweise aufgrund einer schwankenden Anzahl von auf dem Transportelement befindlichen Behältern oder Gebinden überwacht und bei der Steuerung der Geschwindigkeit des Transportelementes berücksichtigt werden. Somit ist in besonders einfacher Weise auch bei einer ungleichmäßigen Dehnung des Transportelements eine gleichmäßige Geschwindigkeitsreglung möglich. Dazu sind die Sensoren bevorzugt an den sich gegenüberliegenden Enden bzw. Seiten des Transportelements versetzt zueinander angeordnet. Ganz besonders bevorzugt ist der Abstand zwischen allen benachbarten Sensoren entlang des Transportelements zueinander gleich. Bei der Verwendung mehrerer Sensoren werden ebenfalls bevorzugt die jeweils bei einer Erfassung der Positionsmarke ermittelten Werte des Drehwinkelgebers mit einem für den jeweiligen Sensor spezifischen Referenzdrehwinkel verglichen.

Alternativ ist auch eine Ausgestaltung der erfindungsgemäßen Vorrichtung denkbar, bei der an dem Transportelement mehrere Positionsmarken angeordnet sind, die von einem Sensor erfasst werden, so dass auch in dieser Weise eine abschnittsweise Bestimmung der Dehnung des Transportelements mittels der zeitlichen Änderung der Differenz des jeweiligen Drehwinkels mit einem entsprechenden Referenzwert sowie eine mehrfache Steuerung der Geschwindigkeit bei einem vollem Umlauf des Transportelements möglich sind.

Bei einer bevorzugten Weiterbildung der erfindungsgemäßen Vorrichtung entspricht der Abstand des Sensors zur Antriebseinheit wenigstens 50 %, bevorzugt wenigstens 80 %, besonders bevorzugt wenigstens 90 % und ganz besonders bevorzugt wenigstens 95 % der Länge des Lasttrums des Transportelements, wodurch in besonders einfacher Weise die Dehnung und Geschwindigkeit des mit Behältern bzw. Gebinden belasteten Teils des Transportelements gemessen und entsprechend geregelt werden kann. Ganz besonders bevorzugt weist der Sensor eine größtmögliche Distanz zur Antriebseinheit, insbesondere zum Drehwinkelgeber der Antriebseinheit, dem Lasttrum folgend auf. Der Lasttrum ist dabei der gesamte gezogene Teil des Antriebselements und entspricht dabei bevorzugt in etwa der halben Länge des endlos umlaufenden Transportelements. Besonders bevorzugt ist der Lasttrum dabei der gezogene Teil des Transportelements zwischen der einzigen Antriebseinheit und der Umlenkrolle, die am weitesten von der Antriebseinheit entfernt ist. Nach einer bevorzugten Weiterbildung der erfindungsgemäßen Vorrichtung wird die mindestens eine Positionsmarke durch eine oder mehrere an dem Transportelement befestigte Schaltfahnen gebildet, wodurch das Transportelement unabhängig von der Positionsmarke besonders günstig hergestellt werden kann und zugleich bei einem Defekt oder Verschleiß des Transportelement oder der Positionsmarke dieses bzw. diese besonders leicht und kostengünstig auswechselbar ist. Bei der Schaltfahne kann es sich grundsätzlich sowohl um ein Bauteil zur mechanischen, als auch zur berührungslosen Auslösung des Sensors bzw. Registrierung durch den Sensor handeln. Bevorzugt ist die Schaltfahne dabei einstückig gebildet. Ebenfalls bevorzugt wird die Schaltfahne stoff- und/oder kraftschlüssig am Transportelement festgelegt.

Dabei kann von Vorteil sein, wenn die Schaltfahnen oder Positionsmarken im Wesentlichen gleich, jedoch leicht unterschiedlich sind, indem beispielsweise Schaltfahnen unterschiedlicher Länge verwendet werden. Hierdurch kann eindeutig eine Position, wie eine Nullposition bestimmt und somit auch ein Teil der Transportvorrichtung erkannt werden.

Bei einer alternativen Weiterbildung der erfindungsgemäßen Vorrichtung ist die mindestens eine Positionsmarke oder Schaltfahne Teil des Transportelements, insbesondere Teil dessen Kontur, Textur oder Aufbau, beispielsweise eine Naht eines als Band gestalteten Transportelements, eine Ausnehmung oder Öffnung, ein angeformter Vorsprung, eine Färbung, ein umlaufendes Werkzeug oder Werkzeugteil oder dergleichen.

Bei einer erfindungsgemäßen Vorrichtung ist ein zweites endlos umlaufendes Transportelement vorgesehen, wobei die Steuereinheit des ersten Transportelements mit einer Steuereinheit des zweiten Transportelements kommuniziert oder alternativ Daten eines Drehwinkelgebers und/oder eines Sensors des zweiten Transportelements empfängt, um die Geschwindigkeiten beider Transportelemente aufeinander abzustimmen, insbesondere zu synchronisieren, wodurch in besonders einfacher Weise ein aufeinander abgestimmter Betrieb zweier Transportelemente und eine kräftefreie Übergabe eines transportierten Gegenstandes zwischen den Transportelementen gewährleistet wird.

Bei einer weiteren vorteilhaften Ausgestaltung der erfindungsgemäßen Vorrichtung ist das erste Transportelement derart an das zweite Transportelement angeordnet, dass Behälter oder Gebinde vom ersten an das zweite Transportelement übergeben werden können. Bei einer alternativen vorteilhaften Ausgestaltung der erfindungsgemäßen Vorrichtung ist das zweite endlos umlaufende Transportelement wenigstens abschnittsweise, bevorzugt vollständig, parallel zu dem ersten Transportelement angeordnet ist, wodurch in besonders einfacher Weise eine Drehung von Behältern oder Gebinden durch die gezielte Einstellung einer Differenzgeschwindigkeit und/oder ein besserer, drehungsfreier Transport mittels mehrerer synchronisierter Transportelemente möglich ist. Ebenfalls bevorzugt weisen beide Transportelemente eine gleiche Transportrichtung auf und/oder sind in einer gemeinsamen Ebene angeordnet. Weiterhin bevorzugt ist das zweite Transportelement in Transportrichtung beider Transportelemente unmittelbar hinter dem ersten Transportelement angeordnet.

Bei einer bevorzugten Weiterbildung der erfindungsgemäßen Vorrichtung sind weitere Sensoren mit der Steuereinheit verbunden, die Informationen, beispielsweise über die Temperatur, Luftfeuchtigkeit oder Beladung des Transportelements erfassen, um die Berechnung der Informationen zur Geschwindigkeitssteuerung bzw. über die Dehnung des Transportelements zu verbessern, wodurch in besonders einfacher Weise der Quereinfluss äußerer Parameter minimiert bzw. ausgeschlossen werden kann.

Nach einer vorteilhaften Ausgestaltung des erfindungsgemäßen Verfahrens wird mittels der einen Steuereinheit die Geschwindigkeit des Transportelements sowie bevorzugt wenigstens eines weiteren Transportelements jeweils über die Antriebseinheit des Transportelements bedarfsweise geregelt, wodurch in besonders einfacher Weise die Geschwindigkeiten beider Transportelemente synchronisiert bzw. aufeinander abgestimmt werden können, insbesondere zur Übergabe von Behältern und/oder Gebinden von dem einem Transportelement auf das andere Transportelement.

Bei einer weiteren vorteilhaften Ausgestaltung des erfindungsgemäßen Verfahrens wird für mehrere auf dem Transportelement angeordneten Positionsmarken jeweils bei einer Erfassung durch den Sensor ein jeweiliger Drehwinkel bestimmt und nachfolgend durch Abgleich mit einem zugehörigen Referenzdrehwinkel eine dynamischen Geschwindigkeitsreglung der Antriebseinheit und/oder eine Bestimmung der Dehnung für den jeweiligen Abschnitt des Transportelements vorgenommen. Dabei ist der jeweilige Abschnitt der gesamte Bereich des Transportelements in Transportrichtung, der hinter der vorherigen Positionsmarke bis zu der jeweils erfassten Positionsmarke liegt.

Nach einer bevorzugten Ausgestaltung des erfindungsgemäßen Verfahrens wird mittels mehrerer gegenüber dem Transportelement angeordneter Sensoren jeweils bei einer Erfassung einer einzigen Positionsmarke der jeweilige Drehwinkel bestimmt und durch Abgleich mit einem zugehörigen Referenzdrehwinkel eine dynamische Geschwindigkeitsreglung der Antriebseinheit und/oder eine Bestimmung der Dehnung für den jeweiligen Abschnitt des Transportelements vorgenommen.

Nach einer ebenfalls bevorzugten Ausgestaltung des erfindungsgemäßen Verfahrens wird zugleich mit der Bestimmung des Drehwinkels mittels wenigstens eines weiteren Sensors, insbesondere eines Feuchte- und/oder Temperatursensors, wenigstens ein Quereinfluss erfasst und eine Korrektur bei dem Abgleich des erfassten Drehwinkels mit dem Referenzdrehwinkel mittels des gemessenen Quereinflusses durchgeführt, wodurch die Bestimmung der Dehnung des Transportelements besonders zuverlässig bestimmt werden und die Steuerung der Geschwindigkeit besonders genau erfolgen kann. Dabei kann insbesondere eine Ausdehnung und/oder ein geändertes elastisches Verhalten des Transportelements aufgrund einer veränderten Umgebungsfeuchte oder -temperatur korrigiert werden. Dies ist insbesondere zur Bestimmung der Dehnung relevant, da eine temperaturbedingte Ausdehnung nicht zu einer Warnung über eine Abnutzung des Transportelements führen soll. Auf diese Weise können Fehlalarme verhindert werden, die zu einer Unterbrechung des Betriebs, gegebenenfalls zu einer vorzeitigen Erneuerung des Transportelements und somit zu gesteigerten Betriebskosten führen würde.

Bei einem erfindungsgemäßen Verfahren werden mittels der Steuereinheit des erstens Transportelements zusätzlich auch Daten eines Drehwinkelgebers und/oder eines Sensors für eine Positionsmarke eines zweiten Transportelements erfasst, um wenigstens das erste Transportelement an das zweite Transportelement angepasst zu regeln. Besonders bevorzugt werden beide Transportelemente bedarfsweise geregelt. Dazu ist bei einer besonders bevorzugten Ausgestaltung ein Steuerelement mit jeweils einem Drehwinkelgeber von zwei Antriebseinheiten der Vorrichtung und einem Sensor verbunden.

Bei einer weiteren bevorzugten Ausgestaltung des Verfahrens bzw. der Vorrichtung erfolgt eine Ausgabe der Dehnung bzw. der Längung des Transportelements auf einer Anzeige der Benutzerschnittstelle. Alternativ oder zusätzlich erfolgt besonders bevorzugt eine optische und/oder akustische Ausgabe einer Warnung beim Überschreiten eines festlegbaren Grenzwertes für die Dehnung. Weiterhin kann auch ein automatischer Stopp der Vorrichtung bei Erreichen eines Grenzwertes vorgesehen sein.

Ein Ausführungsbeispiel der erfindungsgemäßen Vorrichtung wird nachstehend mit Bezug auf die Zeichnung näher erläutert. In der Figur zeigt:

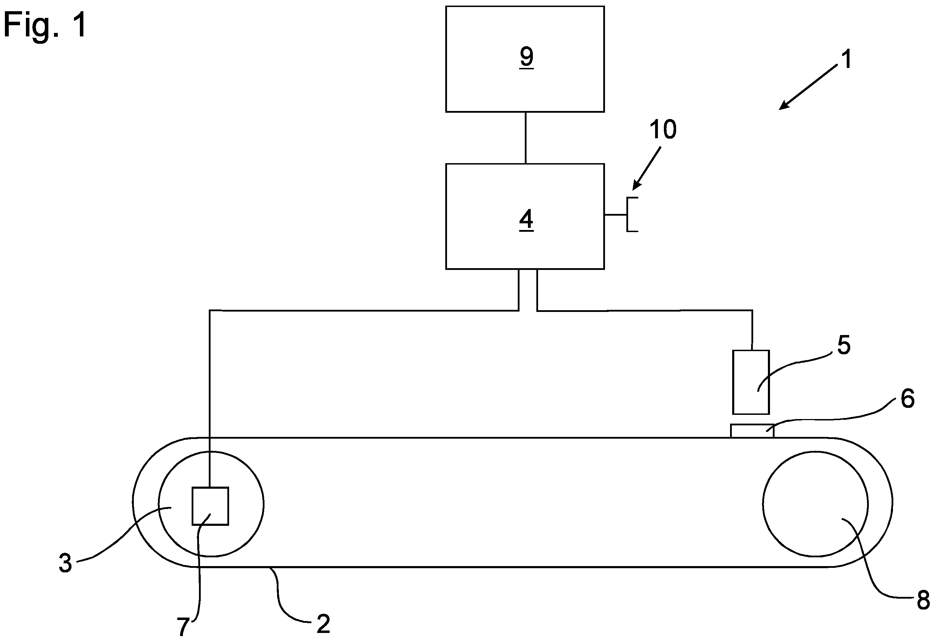

- Fig. 1: eine schematische Darstellung des Aufbaus einer Vorrichtung zum Transport von Behältern oder Gebinden.

Bei einer in Fig. 1 schematisch dargestellten Vorrichtung 1 zum Transport von Kunststoffflaschen bzw. Gebinden aus Flaschen ist ein endloses Transportband 2 einenends umlaufend an einer Umlenkrolle 8 und anderenends an einer Antriebsrolle einer Antriebseinheit 3 umgelenkt. Die Antriebseinheit 3 treibt das Transportband 2 mittels eines Servomotors an. Der Servomotor weist dabei einen Inkrementalgeber 7 zur Erfassung der jeweiligen Stellposition auf und wird von einer Steuereinheit 4 gesteuert, die die Umdrehungsgeschwindigkeit des Servomotors stufenlos regelt und Daten des Inkrementalgebers 7 kontinuierlich empfängt.

Weiterhin ist zur Veranschaulichung an einer Oberfläche des Transportbandes 2 eine Schaltfahne 6 festgelegt, die von einem Sensor 5 erfassbar ist. Die Schaltfahne 6 kann natürlich auch im Inneren des Transportbandes 2 oder einem oder mehreren Elementen hiervon integriert sein und beispielsweise induktiv erfassbar sein. Der Sensor 5 ist dem Lasttrum des Transportbandes 2 folgend an dem der Antriebseinheit 3 abgewandten Ende des Transportbandes 2 im Bereich der Umlenkrolle 8 angeordnet und derart auf das Transportband 2 gerichtet, dass die Schaltfahne 6 damit erfasst werden kann. Auch der Sensor 6 ist mit der Steuereinheit 4 verbunden und sendet kontinuierlich die Erfassung der Schaltfahne 6 an die Steuereinheit 4. Diese Schaltfahne 6 kann beispielsweise alternativ auch ein Werkzeug oder Werkzeugteil sein, beispielsweise ein Führungs- und/oder Umformfinger.

Die Steuereinheit 4 ist eine speicherprogrammierbare Steuerung, die zur Bedienung sowie zur Ausgabe von Informationen eine Benutzerschnittstelle 9 aufweist. Die Steuereinheit 4 umfasst eine Schnittstelle 10 zur Programmierung mittels eines externen Gerätes und/oder zur Kopplung mehrerer Steuereinheiten 4, beispielsweise bei einer Anordnung mehrerer Transportbänder 2 hintereinander oder parallel zueinander.

Um die Dehnung des Transportbandes 2 zu überwachen, wird direkt nach der Montage eines neuen Transportbandes 2 bei einer Erfassung der Schaltfahne 6 durch den Sensor 5 im Betrieb der zugehörige Drehwinkelwert bzw. Inkrementalwert des Inkrementalgebers 7 in der Steuereinheit 4 als Referenzwert gespeichert. Im nachfolgenden Betrieb der Vorrichtung 1 wird regelmäßig oder kontinuierlich bei einer Erfassung der Schaltfahne 6 erneut der Drehwinkelwert bzw. Inkrementalwert der Antriebseinheit 3 erfasst und mit dem Referenzwert abgeglichen. Bei einer Dehnung des Transportbandes erreicht die Schaltfahne 6 den Sensor 5 etwas später, wodurch sich auch der zugehörige Drehwinkelwert bzw. Inkrementalwert ändert. Aus der Differenz beider Werte, des Referenzwertes und des aktuell gemessenen Drehwinkelwerts, ist die Dehnung des Transportbandes 2 berechenbar. Die Auflösung der Messung ist dabei abhängig von der Auflösung des Inkrementalgebers, der Anzahl der Motorumdrehungen für einen Umlauf des Transportbandes 2 und der Länge des Transportbandes 2.

In der Steuereinheit 4 wird die Dehnung bzw. Längung des Transportbandes 2 überwacht und bei Erreichen eines zuvor festgelegten Grenzwertes eine Warnung bzw. eine Aufforderung zur Erneuerung des Transportbandes 2 auf der Benutzerschnittstelle 9 ausgegeben. Insbesondere kann auf der Benutzerschnittstelle 9 auch durchgehend die aktuelle Dehnung des Transportbandes 2 wiedergegeben werden.

Weiterhin ist mittels der Steuereinheit 4 eine dynamische Geschwindigkeitsreglung des Transportbandes 2 mittels der Antriebseinheit 3 möglich. Dazu wird ebenfalls die Differenz aus dem Referenzwert und dem aktuellen Drehwinkelwert bei einem Durchgang der Schaltfahne 6 am Sensor 5 erfasst, wie die reale Geschwindigkeit des Transportbandes 2 in Bezug zur Umdrehungsgeschwindigkeit der Antriebseinheit 3 ist. Bei einer Dehnung des Transportbandes 2 verlangsamt sich die Geschwindigkeit des Transportbandes 2 bei gleichbleibender Umdrehungsgeschwindigkeit der Antriebsrolle der Antriebseinheit 3. Um eine gleichbleibende Geschwindigkeit des Transportbandes 2 zu gewährleisten, beispielsweise um es mit einem nachfolgenden Transportband synchron zu halten, ist daher eine an die Dehnung des Transportbandes 2 angepasste Steuerung der Antriebseinheit 3 notwendig. Darüber hinaus kann es nicht nur aufgrund von Abnutzung bzw. Alterung, sondern auch aufgrund einer unterschiedlichen Belastung mit zu transportierenden Gegenständen zu einer variierenden Dehnung des Transportbandes 2 kommen. Durch die kontinuierliche Überwachung des Transportbandes 2 sowie die Berechnung mittels der Steuereinheit 4 ist eine dynamische Steuerung der Antriebseinheit 3 und damit die Aufrechterhaltung einer gleichbleibenden bzw. an ein weiteres Transportband angepassten Geschwindigkeit des Transportbandes 2 möglich.

### Bezugszeichenliste

- 1: Vorrichtung zum Transport von Behältern oder Gebinden
- 2: Transportelement
- 3: Antriebseinheit
- 4: Steuereinheit
- 5: Sensor
- 6: Positionsmarke
- 7: Drehwinkelgeber
- 8: Umlenkrolle
- 9: Benutzerschnittstelle
- 10: Schnittstelle

## Patentansprüche

1. Vorrichtung zum Transport von Behältern oder Gebinden (1), umfassend
- ein endlos umlaufendes Transportelement (2),
- eine Antriebseinheit (3) zum Antrieb des umlaufenden Transportelements (2),
- eine Steuereinheit (4) zur Steuerung der Antriebseinheit (3),
- mindestens einen stationären Sensor (5) zur Erfassung mindestens einer Positionsmarke (6) des Transportelements (2), wobei
- die Antriebseinheit (3) einen Drehwinkelgeber (7) aufweist und
-
- wobei ein zweites endlos umlaufendes Transportelement vorgesehen ist, wobei die Steuereinheit (4) des ersten Transportelements (2) eingerichtet ist, mit einer Steuereinheit des zweiten Transportelements zu kommunizieren, oder Daten eines Drehwinkelgebers und/oder eines Sensors des zweiten Transportelements zu empfangen, um die Geschwindigkeiten beider Transportelemente (2) zu synchronisieren, **dadurch gekennzeichnet, dass** die Steuereinheit (4) derart mit dem Drehwinkelgeber (7) sowie mit dem Sensor (5) verbunden ist, dass mittels der Daten des Drehwinkelgebers (7) sowie des Sensors (5) die Antriebseinheit (3) gesteuert werden kann und/oder eine Dehnung des Transportelements (2) berechenbar ist.

2. Vorrichtung nach Anspruch 1, **gekennzeichnet durch** genau einen Sensor (5) pro Transportelement (2).

3. Vorrichtung nach Anspruch 1 oder 2, **gekennzeichnet durch** genau eine Positionsmarke (6) pro Transportelement (2).

4. Vorrichtung nach einem oder mehreren der vorhergehenden Ansprüche, **dadurch gekennzeichnet, dass** mindestens zwei identische Sensoren (5) versetzt zueinander entlang des Transportelements (2) angeordnet sind und dabei derart mit der Steuereinheit (4) zusammenwirken, dass die Daten jedes Sensors (5) mit Daten des Drehwinkelgebers (7) verarbeitet werden können, um eine abschnittsaufgelöste Bestimmung der Dehnung des Transportelements (2) und/oder eine abschnittsaufgelöste dynamischen Geschwindigkeitssteuerung der Antriebseinheit (3) zu ermöglichen.

5. Vorrichtung nach einem oder mehreren der vorhergehenden Ansprüche, **dadurch gekennzeichnet, dass** der Abstand des Sensors (5) zur Antriebseinheit (3) wenigstens 95 % der Länge des Lasttrums des Transportelements (2) entspricht.

6. Vorrichtung nach einem oder mehreren der vorhergehenden Ansprüche, **dadurch gekennzeichnet, dass** die Positionsmarke (6) durch eine an dem Transportelement (2) befestigte Schaltfahne gebildet wird.

7. Vorrichtung nach einem oder mehreren der vorhergehenden Ansprüche, **dadurch gekennzeichnet, dass** das erste Transportelement (2) derart an das zweite Transportelement angeordnet ist, dass Behälter oder Gebinde vom ersten an das zweite Transportelement (2) übergeben werden können.

8. Vorrichtung nach einem oder mehreren der vorhergehenden Ansprüche, **dadurch gekennzeichnet, dass** das zweite endlos umlaufende Transportelement wenigstens abschnittsweise parallel zu dem ersten Transportelement (2) angeordnet ist.

9. Verfahren zur Steuerung und Überwachung einer Transportvorrichtung, mit einem durch eine Antriebseinheit (3) mit einem Drehwinkelgeber (7) angetriebenen endlos umlaufenden Transportelement (2) sowie einem stationären Sensor (5) zur Erfassung einer Positionsmarke (6) des Transportelements (2), insbesondere für eine Vorrichtung (1) nach einem der vorhergehenden Ansprüche, mit den Schritten:
- Bestimmung eines ersten Drehwinkels mittels des Drehwinkelgebers (7) bei einer Erfassung der Positionsmarke (6) durch den Sensor (5) und Abspeichern in einer Steuereinheit (4) als Referenzdrehwinkel,
- Bestimmung wenigstens eines weiteren Drehwinkels bei einer erneuten Erfassung der Positionsmarke (6) durch den Sensor (5) und Übermittlung an die Steuereinheit (4) sowie
- Abgleich des erfassten Drehwinkels mit dem Referenzdrehwinkel in der Steuereinheit (4) sowie Reglung der Geschwindigkeit der Antriebseinheit (3) und/oder Bestimmung der Dehnung des Transportelements (2), **dadurch gekennzeichnet, dass**
mittels der Steuereinheit (4) zusätzlich auch Daten eines Drehwinkelgebers und/oder eines Sensors für eine Positionsmarke eines zweiten Transportelements erfasst werden, um wenigstens das erste Transportelement (2) an das zweite Transportelement angepasst zu regeln.

10. Verfahren nach Anspruch 9, **dadurch gekennzeichnet, dass** mittels der Steuereinheit (4) die Geschwindigkeit des Transportelements (2) sowie bevorzugt wenigstens eines weiteren Transportelements jeweils über die Antriebseinheit (3) des Transportelements (2) bedarfsweise geregelt wird.

11. Verfahren nach Anspruch 9 oder 10, **dadurch gekennzeichnet, dass** für mehrere auf dem Transportelement (2) angeordneten Positionsmarken (6) jeweils bei einer Erfassung durch den Sensor (5) ein jeweiliger Drehwinkel bestimmt wird und durch Abgleich mit einem zugehörigen Referenzdrehwinkel eine dynamische Geschwindigkeitsreglung der Antriebseinheit (3) und/oder eine Bestimmung der Dehnung für den jeweiligen Abschnitt des Transportelements (2) vorgenommen wird.

12. Verfahren nach einem oder mehreren der Ansprüche 9 bis 10, **dadurch gekennzeichnet, dass** mittels gegenüber dem Transportelement (2) angeordneter Sensoren (5) jeweils bei einer Erfassung einer einzigen Positionsmarke (6) der jeweilige Drehwinkel bestimmt wird und durch Abgleich mit einem jeweiligen Referenzdrehwinkel eine dynamische Geschwindigkeitsreglung der Antriebseinheit (3) und/oder eine Bestimmung der Dehnung für den jeweiligen Abschnitt des Transportelements (2) vorgenommen wird.

13. Verfahren nach einem oder mehreren der Ansprüche 9 bis 12, **dadurch gekennzeichnet, dass** zugleich mit der Bestimmung des Drehwinkels mittels wenigstens eines weiteren Sensors wenigstens ein Quereinfluss erfasst wird und eine Korrektur bei dem Abgleich des erfassten Drehwinkels mit dem Referenzdrehwinkel mittels des gemessenen Quereinflusses durchgeführt wird.

## Claims

1. Device for transporting containers or multi-packs (1), comprising
- an endlessly circulating transport element (2),
- a drive unit (3) for driving the circulating transport element (2),
- a control unit (4) for controlling the drive unit (3),
- at least one stationary sensor (5) for sensing at least one position mark (6) of the transport element (2),
wherein
- the drive unit (3) comprises a rotational angle detector (7), and wherein
a second endlessly circulating transport element is provided, wherein the control unit (4) of the first transport element (2) is configured such as to communicate with a control unit of the second transport element, or to receive data from a rotation angle detector and/or from a sensor of the second transport element, in order to synchronise the speeds of both transport elements (2),
**characterised in that** the control unit (4) is connected to the rotational angle detector (7) as well as to the sensor (5) in such a way that, by means of the data from the rotational angle detector (7) and from the sensor (5), the drive unit (3) can be controlled, and/or elongation of the transport element (2) can be calculated.

2. Device according to claim 1, **characterised by** exactly one sensor (5) per transport element (2).

3. Device according to claim 1 or 2, **characterised by** exactly one position mark (6) per transport element (2).

4. Device according to one or more of the preceding claims, **characterised in that** at least two identical sensors (5) are arranged offset to one another along the transport element (2), and in this situation interact with the control unit (4) in such a way that the data from each sensor (5) can be processed with data from the rotational angle detector (7) in order to make possible the determination, resolved section by section, of the elongation of the transport element (2) and/or a dynamic speed control of the drive unit (3), also resolved section by section.

5. Device according to one or more of the preceding claims, **characterised in that** the distance interval from the sensor (5) to the drive unit (3) corresponds to at least 95% of the length of the load strand of the transport element (2).

6. Device according to one or more of the preceding claims, **characterised in that** the position mark (6) is formed by a switch tag secured to the transport element (2).

7. Device according to one or more of the preceding claims, **characterised in that** the transport element (2) is arranged on the second transport element in such a way that containers or multi-packs can be transferred from the first to the second transport element (2).

8. Device according to one or more of the preceding claims, **characterised in that** the second endlessly circulating transport element is arranged at least in sections parallel to the first transport element (2).

9. Method for controlling and monitoring a transport device, with an endlessly circulating transport element (2) driven by a drive unit (3) with a rotational angle detector (7), and a stationary sensor (5) for sensing a position mark (6) of the transport element (2), in particular for a device (1) in accordance with any one of the preceding claims, with the steps:
- Determination of a first rotational angle by means of the rotational angle detector (7) wherein the position mark (6) is detected by the sensor (5) and stored in a control unit (4) as a reference rotational angle,
- determination of at least one further rotational angle with a new detection of the position mark (6) by the sensor (5) and forwarding this to the control unit (4), and
- comparison of the rotational angle sensed with the reference rotational angle in the control unit (4) and regulation of the speed of the drive unit (3) and/or determination of the elongation of the transport element (2),
**characterised in that**
by means of the control unit (4), data from a rotational angle detector and/or from a sensor are also detected, for a position mark of a second transport element, in order to regulate at least the first transport element (2) to the second transport element in an adjusted manner.

10. Method according to claim 9, **characterised in that**, by means of the control unit (4), the speed of the transport element (2) and preferably of at least one further transport element is regulated in each case, as necessary, by means of the drive unit (3) of the transport element (2).

11. Method according to claim 9 or 10, **characterised in that**, for several position marks (6) arranged on the transport element (2), in each case a respective rotational angle is determined at a detection procedure by the sensor (5), and, by comparison with an associated reference rotational angle, a dynamic speed regulation of the drive unit (3) and/or a determination of the rotation is carried out for the respective section of the transport element (2).

12. Method according to one or more of the preceding claims 9 to 10, **characterised in that**, by means of sensors (5) arranged opposite the transport element (2), in each case at the detection of a single position mark (6), the respective rotational angle is determined, and, by a comparison with a respective reference rotational angle, a dynamic speed regulation of the drive unit (3) is carried out, and/or a determination of the elongation for the respective section of the transport element (2).

13. Method according to one or more of the preceding claims 9 to 12, **characterised in that**, at the same time as the determination of the rotational angle by means of at least one further sensor, at least one transverse influence is detected, and a correction carried out at the comparison of the detected rotational angle with the reference rotational angle, by means of the measured transverse influence.

## Revendications

1. Dispositif de transport de récipients ou d'emballages (1), comprenant
- un élément de transport (2) tournant en continu,
- une unité d'entraînement (3) pour l'entraînement de l'élément de transport (2) tournant,
- une unité de commande (4) pour la commande de l'unité d'entraînement (3),
- au moins un capteur stationnaire (5) pour la détection au moins d'une marque de position (6) de l'élément de transport (2),
dans lequel
- l'unité d'entraînement (3) présente un capteur d'angle de rotation (7) et
- dans lequel
un second élément de transport tournant en continu est prévu, dans lequel l'unité de commande (4) du premier élément de transport (2) est conçue afin de communiquer avec une unité de commande du second élément de transport,
ou de recevoir des données d'un capteur d'angle de rotation et/ou d'un capteur du second élément de transport afin de synchroniser les vitesses de deux éléments de transport (2),
**caractérisé en ce que** l'unité de commande (4) est reliée au capteur d'angle de rotation (7) ainsi qu'au capteur (5) de telle manière qu'au moyen des données du capteur d'angle de rotation (7) ainsi que du capteur (5), l'unité d'entraînement (3) puisse être commandée et/ou une expansion de l'élément de transport (2) puisse être calculée.

2. Dispositif selon la revendication 1, **caractérisé par** précisément un capteur (5) par élément de transport (2).

3. Dispositif selon la revendication 1 ou 2, **caractérisé par** précisément une marque de position (6) par élément de transport (2).

4. Dispositif selon l'une ou plusieurs quelconques des revendications précédentes, **caractérisé en ce qu'**au moins deux capteurs (5) identiques sont agencés en déport l'un de l'autre le long de l'élément de transport (2) et coagissent avec l'unité de commande (4) de telle manière que les données de chaque capteur (5) puissent être traitées avec des données du capteur d'angle de rotation (7) afin de permettre une détermination définie par sections de l'expansion de l'élément de transport (2) et/ou une commande de vitesse dynamique définie par sections de l'unité d'entraînement (3).

5. Dispositif selon l'une ou plusieurs quelconques des revendications précédentes, **caractérisé en ce que** la distance du capteur (5) à l'unité d'entraînement (3) correspond au moins à 95 % de la longueur du brin sous charge de l'élément de transport (2).

6. Dispositif selon l'une ou plusieurs quelconques des revendications précédentes, **caractérisé en ce que** la marque de position (6) est formée par un talon de commutation fixé à l'élément de transport (2).

7. Dispositif selon l'une ou plusieurs quelconques des revendications précédentes, **caractérisé en ce que** le premier élément de transport (2) est agencé au niveau du second élément de transport de telle manière que des récipients ou des emballages puissent être transmis du premier au second élément de transport (2).

8. Dispositif selon l'une ou plusieurs quelconques des revendications précédentes, **caractérisé en ce que** le second élément de transport tournant en continu est agencé au moins par sections parallèlement au premier élément de transport (2).

9. Procédé de commande et de surveillance d'un dispositif de transport, avec un élément de transport (2) tournant en continu entraîné par une unité d'entraînement (3) avec un capteur d'angle de rotation (7) ainsi qu'un capteur (5) stationnaire pour la détection d'une marque de position (6) de l'élément de transport (2), en particulier pour un dispositif (1) selon l'une ou plusieurs quelconques des revendications précédentes, avec les étapes suivantes :
- la détermination d'un premier angle de rotation au moyen du capteur d'angle de rotation (7) lors d'une détection de la marque de position (6) par le capteur (5) et l'enregistrement dans une unité de commande (4) en tant qu'angle de rotation de référence,
- la détermination au moins d'un autre angle de rotation pour une nouvelle détection de la marque de position (6) par le capteur (5) et la transmission à l'unité de commande (4) ainsi que
- la comparaison de l'angle de rotation détecté avec l'angle de rotation de référence dans l'unité de commande (4) ainsi que la régulation de la vitesse de l'unité d'entraînement (3) et/ou la détermination de l'expansion de l'élément de transport (2),
**caractérisé en ce que**
des données d'un capteur d'angle de rotation et/ou d'un capteur pour une marque de position d'un second élément de transport sont en outre aussi détectées au moyen de l'unité de commande (4) afin de réguler de manière adaptée au moins le premier élément de transport (2) au second élément de transport.

10. Procédé selon la revendication 9, **caractérisé en ce que** la vitesse de l'élément de transport (2) ainsi que de préférence au moins d'un autre élément de transport est régulée si besoin au moyen de l'unité de commande (4) respectivement par le biais de l'unité d'entraînement (3) de l'élément de transport (2).

11. Procédé selon la revendication 9 ou 10, **caractérisé en ce que** pour plusieurs marques de position (6) agencées sur l'élément de transport (2) respectivement lors d'une détection par le capteur (5), un angle de rotation respectif est déterminé et par comparaison avec un angle de rotation de référence afférent, une régulation de vitesse dynamique de l'unité d'entraînement (3) et/ou une détermination de l'expansion pour la section respective de l'élément de transport (2) est entreprise.

12. Procédé selon l'une ou plusieurs quelconques des revendications 9 à 10, **caractérisé en ce que** l'angle de rotation respectif est déterminé au moyen de capteurs (5) agencés par rapport à l'élément de transport (2) respectivement lors d'une détection d'une seule marque de position (6) et par comparaison avec un angle de rotation de référence respectif, une régulation de vitesse dynamique de l'unité d'entraînement (3) et/ou une détermination de l'expansion pour la section respective de l'élément de transport (2) est entreprise.

13. Procédé selon l'une ou plusieurs quelconques des revendications 9 à 12, **caractérisé en ce qu'**au moins une influence transversale est détectée en même temps que la détermination de l'angle de rotation au moyen au moins d'un autre capteur et une correction est réalisée lors de la comparaison de l'angle de rotation détecté avec l'angle de rotation de référence au moyen de l'influence transversale mesurée.
